(19) Europäisches Patentamt
European Patent Office
Office européen des brevets

(11) **EP 2 141 904 B1**

(12) **EUROPEAN PATENT SPECIFICATION**

(45) Date of publication and mention
of the grant of the patent:
**19.12.2018 Bulletin 2018/51**

(51) Int Cl.:
***H04N 1/407*** *(2006.01)*

(21) Application number: **09251504.8**

(22) Date of filing: **05.06.2009**

(54) **Image reading device, image forming apparatus, and image reading method**

Bildlesevorrichtung, Bilderzeugungsvorrichtung und Bildleseverfahren

Dispositif de lecture d'images, appareil de formation d'images et procédé de lecture d'images

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **02.07.2008 JP 2008173585
20.02.2009 JP 2009037788**

(43) Date of publication of application:
**06.01.2010 Bulletin 2010/01**

(73) Proprietor: **Ricoh Company, Ltd.
Yokohama-shi,
Kanagawa 222-8530 (JP)**

(72) Inventor: **Wada, Shinichiroh
c/o Ricoh Company, Limited
Tokyo 143-8555 (JP)**

(74) Representative: **White, Duncan Rohan et al
Marks & Clerk LLP
Fletcher House (2nd Floor)
Heatley Road
The Oxford Science Park
Oxford OX4 4GE (GB)**

(56) References cited:
**EP-A2- 0 964 569        JP-A- H10 164 360
JP-A- 2002 305 633      JP-A- 2006 191 375
US-A1- 2004 174 568**

**Description**

CROSS-REFERENCE TO RELATED APPLICATIONS

The present application claims priority to Japanese priority document 2008-173585 filed in Japan on July 2, 2008 and Japanese priority document 2009-037788 filed in Japan on February 20, 2009.

BACKGROUND OF THE INVENTION

1. Field of the Invention

The present invention relates to an image reading device, an image forming apparatus, and an image reading method that use a sheet through document feeder (SDF).

2. Description of the Related Art

Many of the multi function peripherals (MFP) (a device that include functions various such as printing, copying, facsimile (FAX) in one device), include a sheet through document feeder (hereinafter, "SDF"). Even in devices other than FAX, the sheet through feeding method is becoming more popular than the platen feeding method.

In image reading devices that employ both the sheet through feeding method and the platen feeding method, apart from an exposure glass that functions as an original platen that fixes and reads the originals, an SDF exposure glass is arranged as an SDF original platen. In the platen feeding method, i.e., when scanning an original placed on the exposure glass, a scanning unit that is located below the exposure glass is moved in a sub-scanning direction and then in a main scanning direction to scan the entire original. On the other hand, in the sheet through feeding method, the scanning unit is driven to a position below the SDF exposure glass and moved in the sub-scanning direction while the original is moved in the main scanning direction to scan the entire original.

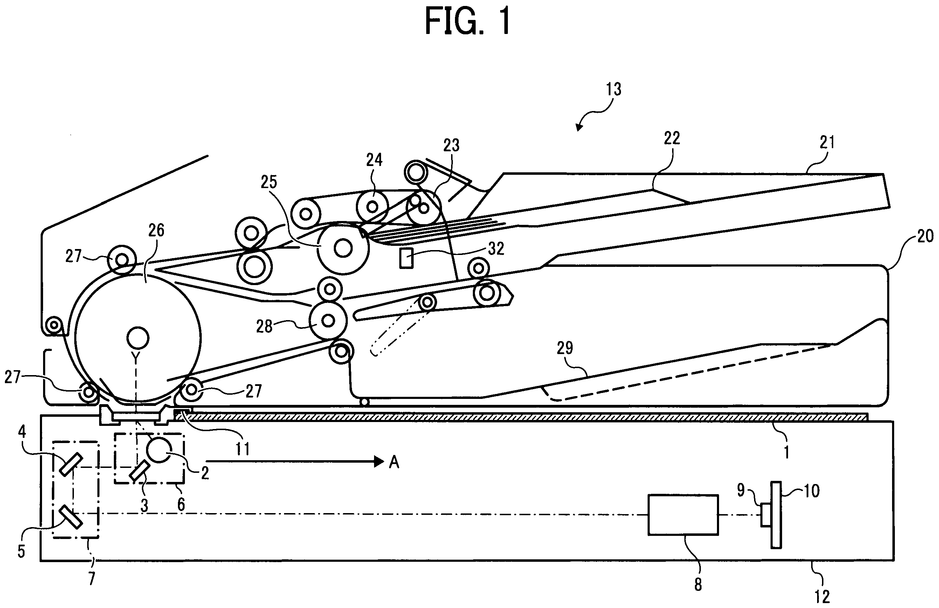

As shown in Fig. 1, a scanner 13 includes a reading unit 12 and an SDF 20 that is attached to an upper portion of the reading unit 12. An exposure glass 1 functions as the original platen for placing an original. The original is placed on the exposure glass 1. A first carriage 6 includes an original-exposing illuminating lamp 2 and a first reflecting mirror 3. The first carriage 6 is moved in a direction of an arrow A while the illuminating lamp 2 is on. As a result, a light beam reflected from the original is reflected again from the first reflecting mirror 3, a second reflecting mirror 4 and a third reflecting mirror 5 in a second carriage 7 formed of, passes via a lens unit 8, and falls on a charge-coupled device (CCD) linear image sensor 9. The CCD linear image sensor 9 performs photoelectric conversion and outputs analog electrical signals indicative of an image of the original.

The analog electrical signals are processed and converted into digital data. A shading correction is carried out on the digital data for uniform correction of distribution of light quantity that is incident on the CCD 9 and distribution of sensitivity of the CCD 9, in a main scanning direction. A white reference board 11, which is arranged at a position that is before the original, is scanned with the first carriage 6 to obtain shading correction data (hereinafter, "shading data"). Shading correction of correcting the digital data obtained from the original with the shading data is performed. Hereinafter, the operation of acquiring the shading data by reading the white reference board 11 is referred to as a shading operation. The shading operation is carried out for every original in the platen feeding method.

In the sheet through feeding method, an original 22 placed on an original tray 21 is transported using a feeding drum 26, which functions as a feeding roller, and a plurality of driven rollers 27 that are arranged around the feeding drum 26 and that push the feeding drum 26. When the original 22 reaches a reading position (home position) Y, a lower face of the original 22 is irradiated using the original-exposing illuminating lamp 2 in a predetermined time period, and in the same manner as the platen feeding method, the CCD linear image sensor 9 outputs analog electrical signals indicative of an image of the original.

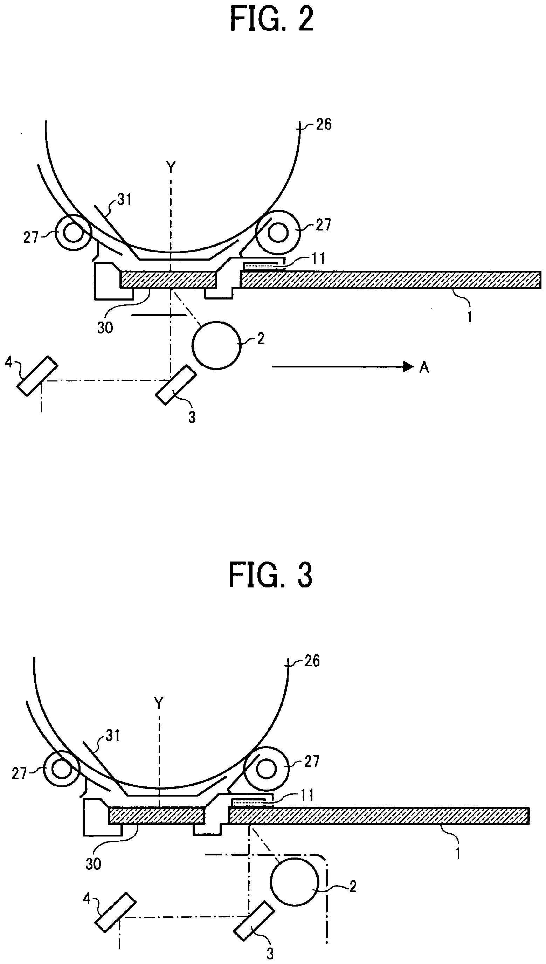

The shading operation is carried out in the sheet through feeding method in the following manner. The first carriage 6 is moved from the home position Y that is shown in Fig. 2 to a position that is shown in Fig. 3, i.e., to a position below the white reference board 11. Then, the white reference board 11 is scanned with the first carriage 6 and the shading data is acquired. After acquiring the shading data, the first carriage 6 moved back the home position Y to scan the original 22.

The shading operation is carried out every time before reading the original 22. However, for ensuring productivity, in some image reading devices, the shading operation is carried out once for several originals, or several times in one minute. In this case, the shading correction is carried out by using the immediately preceding shading data at the time of reading the original. The method explained earlier, i.e., the method of not carrying out the shading operation for every original, is referred to as an intermittent shading method below.

According to a technology disclosed in Japanese Patent Application Laid-open No. 2007-36398, a shading plate is arranged on an upper face of an exposure glass, a reading unit moves substantially parallel to the exposure glass, and an optical path length from the reading unit up to the shading plate and an optical path length from the reading unit up to an exposure glass sheet become substantially equal. Thus, accurate shading correction data can be acquired by using the reading unit and a correction accuracy of sensitivity of any one of a light source and the reading unit or both when the shading correction is carried out can be improved.

Productivity in can be enhanced with the intermittent shading method; however, conventionally, when reading the first original, because there is no previous shading data, it is necessary to carry out the shading operation.

According to the technology mentioned earlier, although a drawback in improving the correction accuracy at the time of shading correction can be resolved, no suggestions are indicated for omitting the shading operation at the time of reading the first original. JP2002305633 proposes an image reader to improve productivity of document image reading by performing correction only with one white reference plate and shortening a reading interval of each original.

JP-A-2006191375 discloses image reader comprising a conveyance section for conveying documents set to a document tray; an image reading device for reading image data from the document conveyed from the conveyance section; and shading operation sections (an image processing section, an exposure lamp unit, and a CCD) is provided an image reading device including a light source; a white reference board that is used for shading correction; a reading unit that reads an original while the original moves on an original platen; a detecting unit that detects whether an original is set on the original platen; an acquiring unit that causes to move, upon the detecting unit detecting setting of the original on the original platen, the light source up to a position of the white reference board and acquires shading correction data by reading the white reference board; a determining unit that determines, upon receiving an original reading start request, whether to execute acquisition of the shading correction data again by using the acquiring unit, before reading a first original; and a shading correcting unit that carries out, upon the determining unit determining to execute acquisition of the shading correction data again by using the acquiring unit before reading the first original, the shading correction by using the acquired shading correction data, and carries out, upon determining not to execute, the shading correction by using the shading correction data that is acquired by using the acquiring unit at the time of detecting setting of the original.

According to another aspect of the present invention, there is provided an image forming apparatus including the above image reading device and an image forming unit that forms an image based on data acquired by the image reading unit.

According to still another aspect of the present invention, there is provided a method of image reading implemented on an image reading device that includes a light source, a white reference board that is used for shading correction, a reading unit that reads an original while the original moves on an original platen, and a detecting unit that detects whether an original is set on the original platen. The method including acquiring shading correction data, upon the detecting unit detecting setting of the original, by reading the white reference board while moving the light source up to a position of the white reference board; determining, upon receiving an original reading start request, whether to execute acquisition of the shading correction data again before reading a first original at the acquiring; and performing shading correcting, upon determining to execute acquisition at the determining, by using the shading correction data acquired again before reading the first original at the acquiring, and performing shading correcting, upon determining not to execute acquisition at the determining, by using the shading correction data acquired at the time of detecting setting of the original at the acquiring.

The above and other objects, features, advantages and technical and industrial significance of this invention will be better understood by reading the following detailed description of presently preferred embodiments of the invention, when considered in connection with the accompanying drawings.

BRIEF DESCRIPTION OF THE DRAWINGS

Fig. 1 is a schematic diagram of an internal structure of an image reading device according to an embodiment of the present invention;

Fig. 2 is an enlarged view on the periphery of a white reference board included in the image reading device shown in Fig. 1;

Fig. 3 is an enlarged view on the periphery of the white reference board included in the image reading device;

Fig. 4 is a schematic diagram for explaining a read data process;

Fig. 5 is a block diagram of a signal process starting from a charge-coupled device (CCD) output up to acquiring digital image signals;

Fig. 6 is a flowchart of control at the time of reading a sheet through document feeder (SDF);

Fig. 7 is a flowchart of one example of a shading operation control of a first original at Step S106;

Fig. 8 is a flowchart of another example of the shading operation control of the first original at Step S106;

Fig. 9 is a block diagram of a shading correction process performed by a shading correcting unit; and

Fig. 10 is a schematic diagram of an image forming apparatus that includes the image reading device according to the embodiment.

## DETAILED DESCRIPTION OF THE PREFERRED EMBODIMENTS

Exemplary embodiments according to the present invention are explained below with reference to the accompanying drawings.

In the following embodiment, a shading operation at the time of reading a first original is omitted thereby improving productivity. Specifically, the present invention aims at reduction of a first copy time or a first scanner time.

Based on various conditions such as a reading mode (color or white-black), applications (copy or facsimile (FAX) or scanner), and a time period since setting an original up to reading the original, it is determined whether to execute the shading operation at the time of setting the original. Thus, the productivity can be improved without resulting in occurrence of density variation of images and color differences in color images.

Operations performed by an image reading device and a structure of the image reading device are explained below.

The structure of the image reading device and processes performed by an image reading device that are indicated below resolve drawbacks in the present invention. Although the structure and the processes are most suitable for accomplishing an aim of the present invention, the present invention is not to be thus limited.

As shown in Fig. 1, a scanner 13 that functions as the image reading device according to an embodiment of the present invention includes the reading unit 12 and the sheet through document feeder (SDF) 20 attached to an upper portion of the reading unit 12.

The reading unit 12 includes the exposure glass 1 that functions as the original platen that loads the original, the first carriage 6 formed of the original-exposing illuminating lamp 2 and the first reflecting mirror 3, the second carriage 7 formed of the second reflecting mirror 4 and the third reflecting mirror 5, the lens unit 8 that forms an image on the CCD linear image sensor 9, a sensor board 10 that mounts the CCD 9, and the white reference board 11 that is used for correcting various distortions caused by a reading optical system etc.

In the platen feeding method, i.e., when an original is placed on the exposure glass 1, the first carriage 6 moves (in a direction of the arrow A) with a constant speed and the second carriage 7 moves following the first carriage 6, with a speed that is half the speed of the first carriage 6, thus optically scanning the original on the exposure glass 1.

Upon completion of scanning of the original, the first carriage 6 and the second carriage 7 are returned to their respective home positions. Positions shown in Fig. 1 are the home positions of the first carriage 6 and the second carriage 7, respectively.

The reading unit 12 also includes a motor driving system (not shown) that moves the first carriage 6 and the second carriage 7.

A structure of the SDF 20 and a reading operation performed by the SDF 20 are explained next.

The SDF 20 includes on a bottom portion of an original tray 21, an original-set detecting sensor 32 that functions as a sensor that detects whether the originals 22 are set in the original tray 21.

The originals 22 loaded on the original tray 21 are sent to a separating unit by using a pickup roller 23. In the separating unit, the originals 22 are separated one by one by using a feeding roller 24 and a separating roller 25 and transported. Subsequently, the originals 22 are transported using a feeding drum 26, which functions as a feeding roller, and a plurality of driven rollers 27 that are arranged around the feeding drum 26 and that push the feeding drum 26.

When the transported originals 22 reach a reading position (the home position) Y, a lower surface of the original 22 is irradiated using the original-exposing illuminating lamp 2 in a predetermined time period. Similar to the operation mentioned earlier, the image is formed on the CCD 9 by a reflected light beam using the first reflecting mirror 3, the second reflecting mirror 4, and the third reflecting mirror 5, and photoelectric conversion is carried out.

The original 22 is transported by using the feeding drum 26 and the driven rollers 27 to a right side shown in Fig. 1 and the reflected light beam that is incident on the CCD 9 performs scanning in a sub-scanning direction of the original 22. The original 22, image data of which is read, is discharged to a discharge tray 29 by using a pair of discharge rollers 28.

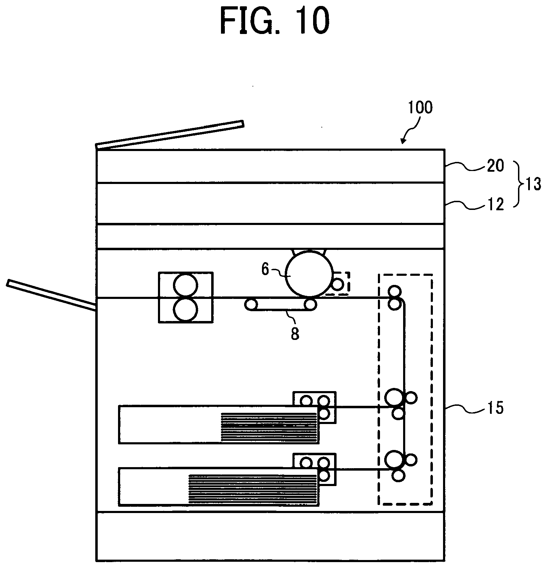

Fig. 10 is a schematic diagram of the image forming apparatus 100. An image forming apparatus 100 includes the scanner 13 and an image forming unit 15 that forms an image based on data acquired by the reading unit 12. The image forming apparatus 100 is a digital multi function peripheral (MFP) that can have one or more functions from among a printer, a facsimile machine, a copier, a scanner. The user can switch the functions by operating keys or switches provided on an operation panel (not shown). The image forming apparatus 100 is put into a printer mode when the user selects the printer function, is put into a scanner mode when the user selects the scanner function, and is put into a copier mode when the user selects the copier function. The operation of the image forming unit 15 in the printer mode, the scanner mode, and the copier mode is known in the art; so that the explanation is omitted herefrom.

A structure on the periphery of the reading position Y according to the present embodiment is explained next.

As shown in Fig. 2, a sheet through exposure glass 30 is arranged opposite to the feeding drum 26 at the reading position Y and an upper guide plate 31 is arranged on an upper portion of the sheet through exposure glass 30.

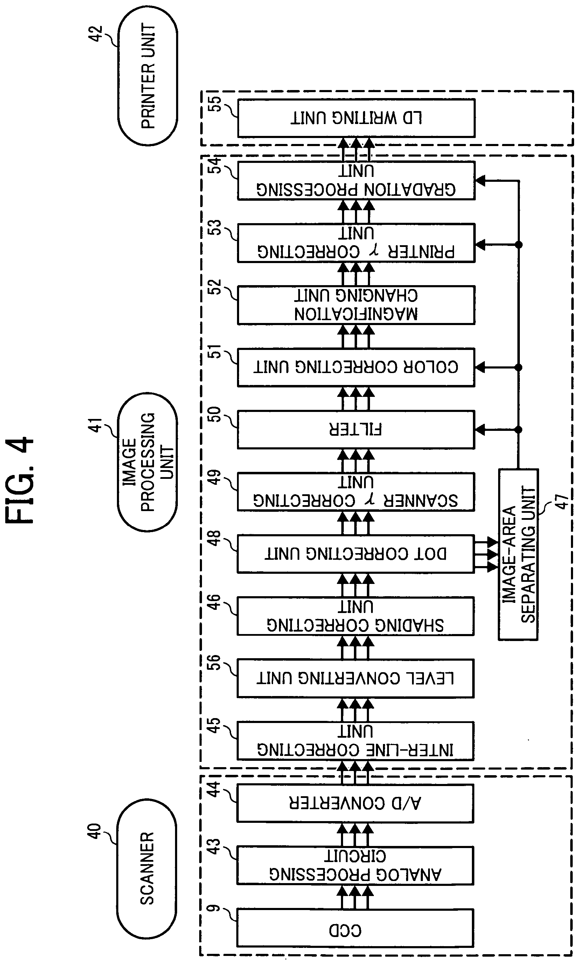

A read data process is explained next with reference to Fig. 4. The CCD 9 is a CCD sensor covered with a red, green, and blue (RGB) filter and assumed as a color three-line CCD that is arranged in three lines.

In an analog processing circuit 43, apart from carrying out sampling of analog waveform signal components that are output from the CCD 9, signal gain is regulated by housing an amplifier.

In an analog-digital (A/D) converter 44, analog image signals of each of R, G, B colors are output as 8-bit color digital image data to an image processing unit 41.

When the three-line CCD 9 is used and when magnification is the same, a displacement exists in four lines of the signals that are output from the CCD 9. In other words, an eight-line displacement exists between R and B. In an inter-line correcting unit 45, R signals are stored in eight lines, G signals are stored in four lines, and caused to delay, thus correcting the inter-line displacement.

In a shading correcting unit 46, corrections related to uneven density of the optical system and sensitivity variation of the CCD 9 are carried out for each RGB signal.

When the magnification is changed, the displacement does not match simply by using the inter-line correcting unit 45. Therefore, in a dot correcting unit 48, the displacement of less than one-line displacement, which cannot be corrected using the inter-line correcting unit 45, is corrected by referring to surrounding pixels.

A level converting unit 56 converts levels when reading the white reference board 11 and the original 22, and regulates a level correction coefficient to get a targeted value. Converting the levels necessitates at least two types of the level correction coefficients, in other words, the level correction coefficient at the time of reading a pressure plate and the level correction coefficient at the time of reading the SDF.

In a scanner $\gamma$ correcting unit 49, data having a linear characteristic related to reflectivity is converted into data having a characteristic of enhancing a correction accuracy of color correction performed by a subsequent color correcting unit 51.

To carry out a process that is best suited to image characteristics in a subsequent process, an image-area separating unit 47 determines whether the image includes a character area or a picture area.

In a filter 50, edges are emphasized to sharpen the character area and a smoothing process is performed to smoothen the picture area.

In the color correcting unit 51, the RGB signals read by using the CCD 9 are converted into blue (cyan), magenta (M), yellow (Y), and black (K) signals. Because the sensitivity of the CCD 9 and ink characteristic differ from ideal characteristics, in the MFP, color correction parameters are regulated such that a difference between originals is corrected.

In a magnification changing unit 52, a magnification changing process in a main scanning direction is carried out. By using a convolution method when carrying out the magnification changing process, the magnification changing process can be carried out while maintaining a modulation transfer function (MTF) of a read optical system and resolution of the image data is maintained. The magnification changing process in the sub-scanning direction is carried out by controlling a main scanning speed in the sub-scanning direction. Moreover, because the convolution method is a general method that is used as an imaging process, an explanation thereof is omitted. In a printer $\gamma$ correcting unit 53, density of the original and a copy is matched in the end and the process is carried out such that a difference between spectroscopic characters, gray balance, and top density of the original and a toner become appropriate.

In a gradation processing unit 54, binarization (in other words, conversion into a single bit) or multiple digitalization (conversion into number of bits ranging from two bits to four bits that can be processed in a printer unit 42) of an 8-bit density data is carried out. Binarization or several-step multiple digitalization is carried out in the character area, a dither process or an error diffusion process is carried out in the picture area, and a result is output to the printer unit 42.

In the printer unit 42 that functions as an image forming unit, C, M, Y, and K image data is printed on sheets via a laser diode (LD) writing unit 55.

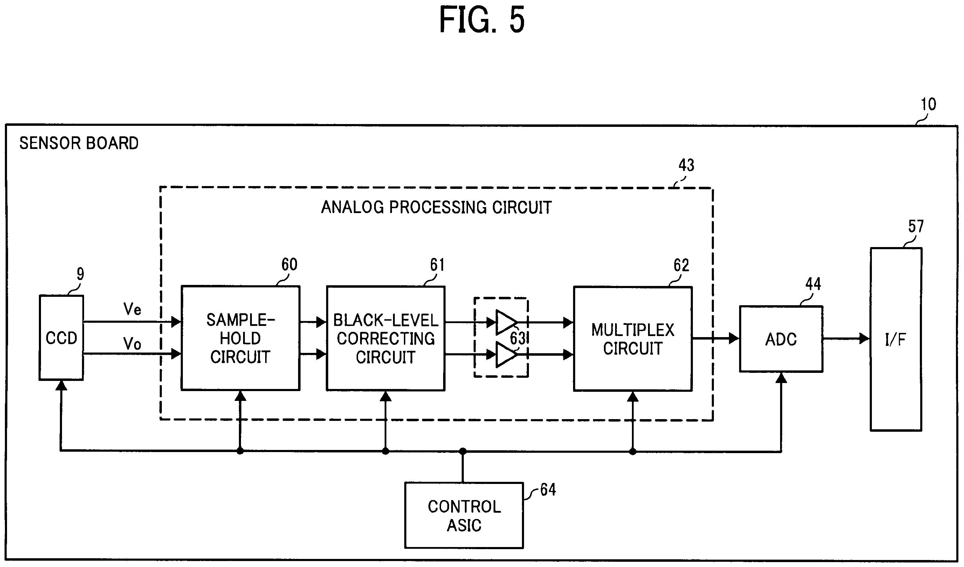

Fig. 5 is a block diagram of a signal process starting from a CCD output up to acquiring digital image signals. First, image signals Ve, Vo are output from the CCD 9 in synchronization with a driving pulse. In a sample-hold circuit 60, sampling of the image signals Ve, Vo, respectively, is carried out by using a sample pulse and the image signals Ve, Vo are maintained. Thus, the image signals are converted into continuous analog signals. After correcting a variation of a dark output level of the CCD in a black-level correcting circuit 61, an output of an odd number pixel and an even number pixel of each color signal is matched with a constant level in an amplifying circuit 63. Subsequently, in a multiplex circuit 62, signals in which the output of the odd number pixel and the even number pixel is multiplexed are converted into digital data by using the A/D converter 44, and the image data is output to the subsequent image processing unit 41 via an interface (I/F) 57. The I/F 57 is an interface between a scanner 40 and the image processing unit 41 shown in Fig. 4.

Signals that are required for driving the CCD 9 and other circuits are generated by a control application-specific integrated circuit (ASIC) 64.

When using the three-line CCD 9, the circuits similar to the circuits that are mentioned earlier are configured for each RGB signal.

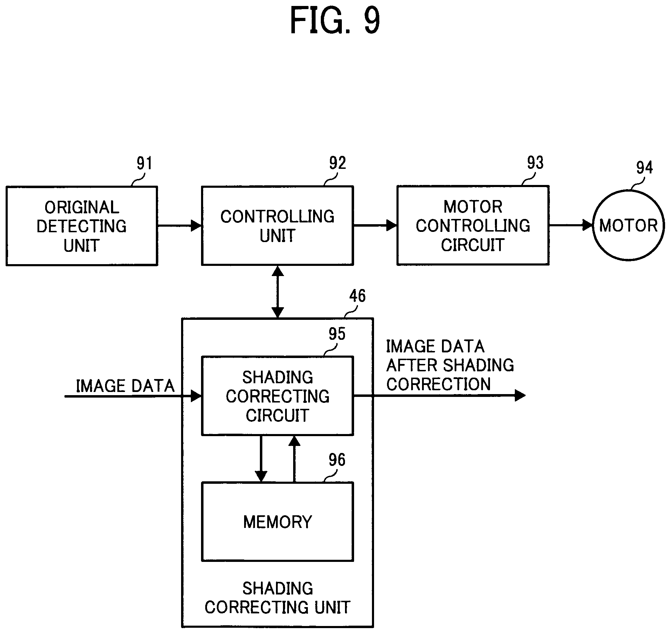

Fig. 9 is a block diagram for explaining a shading correction process performed by the shading correcting unit 46. As shown in Fig. 9, the image forming apparatus includes an original detecting unit 91, a controlling unit 92, a motor controlling circuit 93, and a motor 94. The original detecting unit 91 is the original-set detecting sensor 32 that is shown in Fig. 1. Based on a detection output of the original detecting unit 91, the controlling unit 92 issues instructions of motor driving/stopping to the motor controlling circuit 93. The motor 94, which is a driving motor of the first carriage 6, is driven according to the signals received from the motor controlling circuit 93. Apart from the first carriage 6, the motor 94 functions as a driving motor also for the feeding drum 26, the pickup roller 23, the feeding roller 24, the separating roller 25, etc. and the motor controlling circuit 93 exerts driving control on the motor 94.

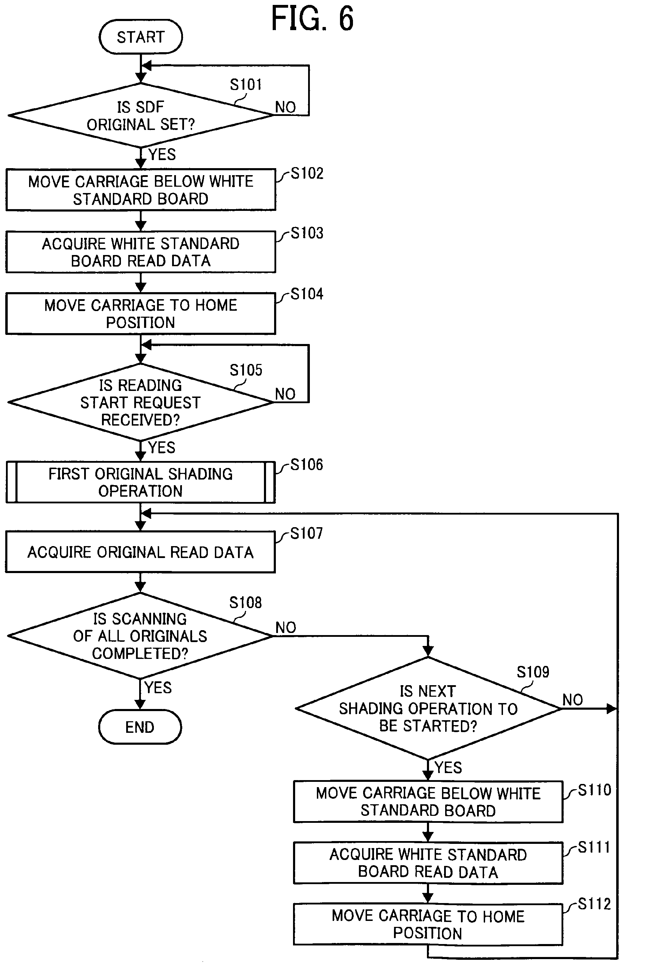

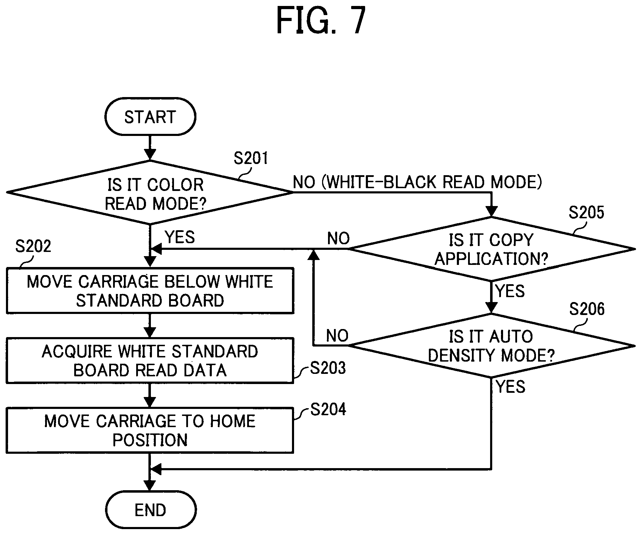

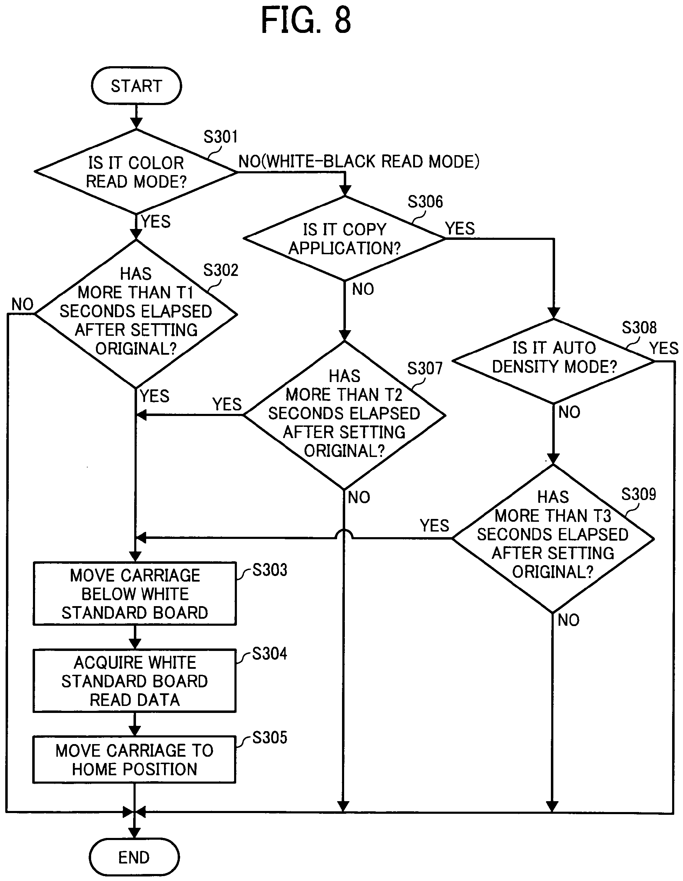

The image forming apparatus includes an acquiring unit and a determining unit. When the original detecting unit 91 detects that the original 22 is set, the acquiring unit moves the first carriage etc., reads the white reference board 11, and acquires the shading data. After an original reading start request is input, the determining unit determines whether to execute acquisition of the shading data again by using the acquiring unit, before reading the first original. The controlling unit 92 executes computer programs that run the processes, which are indicated in flowcharts shown in Figs. 6 to 8 explained later, thus realizing the acquiring unit. The controlling unit 92 executes computer programs that run the processes indicated in flowcharts shown in Figs. 7 and 8, thus realizing the determining unit.

In the shading correction process that is performed by the shading correcting unit 46, which is shown in Fig. 9, the white reference board 11 is read before reading the original 22 and the shading data is created. The shading data is created in a shading correcting circuit 95 and stored in a memory 96. For each reading position in the main scanning direction, the shading correction process is carried out between a shading data Sd and a read data D by using dot units.

When the data is of 10 bits, a shading operation can be expressed with Equation (1):

$$\text{Data after shading correction} = D/Sd \times 1023 \qquad (1)$$

In a level conversion process performed by the level converting unit 56, a level of the read data D when creating the shading data Sd and a level of the read data D when reading the original 22 are corrected and set such that the levels are the targeted values.

In the shading operation that is executed when reading the SDF, the first carriage 6 is caused to move from the home position Y shown in Fig. 2 to the position shown in Fig. 3. After acquiring the read data (shading data) of the white reference board 11, the first carriage 6 is caused to return to the home position Y for scanning the original 22.

Fig. 6 is a flowchart of control at the time of reading the SDF 20 that is executed by the controlling unit 92.

First, based on the signals from the original-set detecting sensor 32, it is determined whether the original 22 is set on the original platen of the SDF 20 (Step S101). If it is detected at Step S101 that the original 22 is not set (No at Step S101), the system control does not proceed to a next process. If it is determined at Step S101 that the original 22 is set (Yes at Step S101), the first carriage 6 is moved to the position below the white reference board 11 (Step S102). Subsequently, the read data, in other words, the shading data of the white reference board 11 is acquired and stored in the memory 96 (Step S103). Further, the first carriage 6 moves to the home position Y (Step S104). Subsequently, it is determined whether the original reading start request (a start button of an operating unit is switched to ON or a reading start command is received from a host computer that is connected directly or via network) is received (Step S105). If the original reading start request is not detected (No at Step S105), the system control does not proceed to the next process. If the original reading start request is detected (Yes at Step S105), the system control proceeds to Step S106. After a shading operation of a first original, which is explained later, or a shading omission process, the original 22 is transported, the original read data is acquired, and the shading correction is carried out (Step S107). The shading correction is carried out by using any one shading data of the shading data (when the shading operation of the first original is executed) that is acquired by using the shading operation of the first original, which is explained later, and that is stored in the memory 96 or the shading data (when the shading operation of the first original is not executed) that is acquired at Step S103 and stored in the memory 96.

Next, it is determined whether scanning of all the originals 22 is completed (Step S108). If scanning of all the originals 22 is completed (Yes at Step S108), the reading operation ends.

If some unscanned originals 22 are still remaining (No at Step S108), it is determined whether to start the shading operation (Step S109). Whether to execute the shading operation is determined depending on, for example, as indicated in the flowchart shown in Fig. 8 that is explained later, whether a scanning mode is a white-black read mode or a color read mode and which application (copy application, FAX application, scanner application) has requested scanning. Moreover, depending on a number of pages read during the previous shading operation or an elapsed time period, whether to start the shading operation is determined.

If the shading operation is necessary (Yes at Step S109), the shading operation similar to the shading operation at Steps S102 to S104 is carried out and the system control returns to Step S107. The shading operation includes moving the first carriage 6 and the second carriage 7 to the position of the white reference board 11, acquiring the read data of the white reference board 11, that is, the shading data and storage of the shading data in the memory 96, and moving the first carriages 6 and the second carriage 7 to the home positions (Steps S110, S111, and S112).

When it is determined that the shading operation is not necessary (No at Step S109), the system control proceeds to Step S107 without carrying out the shading operation and the original reading is carried out. The shading correction at the time of original reading is carried out by using the shading data that is acquired from the previous shading operation and stored in the memory 96.

Fig. 7 is a flowchart of a shading operation control of the first original at Step S106, i.e., first original shading operation.

First, it is determined whether the scanning mode is the color read mode (Step S201). Upon determining that the scanning mode is the color read mode (Yes at Step S201), the shading operation at Steps S202 to S204 is carried out.

If the white-black read mode is determined at Step S201 (No at Step S201), it is determined whether a scan request is received from the copy application, in other words, whether scan data is used by the copy application (Step S205). Upon determining that it is not the copy application (No at Step S205), the shading operation at Steps S202 to S205 is carried out. Upon determining that the application is the copy application (Yes at Step S205), it is further determined whether the scanning mode is an auto density mode (Step S206). In the auto density mode, a background optical density level is determined from the original image data that is read out and a process of texture smoothing (whitening) is automatically carried out. The modes and the process mentioned earlier are widely known. Upon determining that the scanning mode is not the auto density mode (No at Step S206), the shading operation at Steps S202 to S204 is carried out. Upon determining that the scanning mode is the auto density mode (Yes at Step S206), the shading operation is omitted. In other words, when the auto density mode in the copy application is detected, the shading operation is omitted. Apart from detection of the auto density mode in the copy application, the shading operation similar to the shading operation in the color read mode is carried out.

Based on whether the mode is the color read mode or the white-black read mode, whether the application is the copy application or the application other than the copy application, and whether the auto density mode is present or absent, whether to execute the shading operation is determined. However, the present embodiment is an example of a determination standard and depending on characteristics of a light source, for example, the shading operation can be omitted when the auto density mode is absent. The scanning mode (color read mode or white-black read mode, auto density mode or manual density mode) is determined, before receiving a reading start request, by a user from the operation unit or on the host computer.

When productivity is demanded also in the FAX application and the scanner application other than the copy application, the shading operation can be omitted.

Fig. 8 is a schematic diagram of another embodiment at Step S106.

First, it is determined whether the mode is the scanning mode or the color read mode (Step S301). If the mode is the color read mode (Yes at Step S301), it is determined whether a determination time period of T1 seconds or more has elapsed since the original is set (Step S302). If the determination time period of T1 seconds or more has elapsed (Yes at Step S302), the shading operation (Steps S303 to S305) is carried out. If the determination time period of T1 seconds or more has not elapsed (No at Step S302), the shading operation is omitted.

If the white-black read mode is determined at Step S301 (No at Step S301), it is further determined whether the scan request is received from the copy application (Step S306). Upon determining that the request is received from the copy application (Yes at Step S306), it is determined whether the mode is the auto density mode (Step S308). Upon determining that the mode is the auto density mode (Yes at Step S308), the shading operation is omitted and the process is ended (the system control returns to Step S107). If the application is other than the copy application (No at Step S306), it is determined whether the determination time period of T2 seconds or more has elapsed (Step S307). If the determination time period of T2 seconds or more has elapsed (Yes at Step S307), the shading operation (Steps S303 to S305) is carried out.

If the mode is not the auto density mode in the copy application (No at Step S308), it is determined whether the determination time period of T3 seconds or more has elapsed (Step S309) after the original is set. If the determination time period of T3 seconds or more has elapsed (Yes at Step S309), the shading operation (Steps S303 to S305) is carried out. If the determination time period of T3 seconds or more has not elapsed (No at Step S309), the shading operation is omitted.

The determination time periods T1, T2, and T3 are values that are set within a range in which light quantity variation does not affect density variation of the read image data. The light quantity of a light source 2 varies due to temperature etc. and affects the read data. However, what extent of the light quantity variation affects the read data (in other words, an output image) to an unacceptable extent changes according to whether the scanning mode is the color read mode or the white-black read mode, the auto density mode or the manual density mode, or the application is the copy application or the FAX application. Therefore, it is desirable to differ the values of the time periods T1, T2, and T3, respectively. However, the determination time periods T1, T2, and T3 can have the same value. The values can be assumed as fixed values during the computer program. However, the values can be prior set at the time of factory shipment etc. and the user or a serviceman can also change the values from the operating unit (not shown). When determining the values, the set values are stored in a non-volatile memory (not shown) and read before determination is carried out at Steps S302, S307, and S309.

Based on whether the mode is the color read mode or the white-black read mode, whether the application is the copy application or the application other than the copy application, and whether the auto density mode is present or absent, whether to execute the shading operation is determined. However, the present embodiment is an example of a determination standard and depending on characteristics of a light source, for example, the shading operation can be omitted when the auto density mode is absent.

When productivity is demanded also in the FAX application and the scanner application other than the copy application, the shading operation can be omitted.

A determination at Step S109 shown in Fig. 6 can be carried out similar to Steps S301, S302, and S306 to S309 shown in Fig. 6. However, at Steps S302, S307, and S309, the determination is carried out based on a time period that has elapsed since the previous shading operation and not on the time period that has elapsed since setting the original. The same values of T1, T2, and T3 can also be used or different values can also be used as threshold values when the determination at Step S109 is carried out based on the time period that has elapsed since the previous shading operation. Moreover, Steps S303 to S305 shown in Fig. 8 are read instead of Steps S110 to S112 shown in Fig. 6.

Thus, when the original is set on the original platen at the time of reading the SDF, the shading operation is carried out without requiring a separate component. Moreover, the shading operation is omitted when reading the first original thereby enhancing the productivity by reducing a first copy time or a first scanner time.

According to an aspect of the present invention, when an original is set on an original platen at the time of reading a sheet through document feeder (SDF), a shading operation is carried out. By omitting the shading operation when reading a first original, productivity can be improved.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

**Claims**

1.    An image reading device comprising:

a light source (2);
a white reference board that is used for shading correction (11);
a reading unit (12) configured to read an original while the original moves on an original platen;
a detecting unit (32, 91) configured to detect whether an original is set on the original platen;
an acquiring unit (92) configured to cause the light source to move up to a position of the white reference board and to acquire first shading correction data by reading the white reference board, at least when the detecting unit detects setting of the original on the original platen; **characterized by**:

a determining unit (92) configured to determine, upon receiving an original reading start request from an application, whether to execute acquisition of the shading correction data again by using the acquiring unit to acquire second shading correction data, before reading a first original; and
a shading correcting unit (46) configured to carry out, upon the determining unit determining to execute acquisition of the shading correction data again by using the acquiring unit before reading the first original, the shading correction by using the second shading correction data, and carries out, upon determining not to execute acquisition of the shading correction data again by using the acquiring unit before reading the first original, the shading correction by using the first shading correction data, wherein the determining unit (91) determines whether to execute acquisition of the shading correction data, based on a type of an application selected from, a fax application, a copy application and a scanner application, that has requested reading of the original by using the reading unit.

2.    An image forming apparatus comprising:

the image reading device according to claim 1; and
an image forming unit arranged to form an image based on data acquired by the image reading unit.

3. A method of image reading implemented on an image reading device that includes a light source, a white reference board that is used for shading correction, a reading unit that reads an original while the original moves on an original platen, and a detecting unit that detects whether an original is set on the original platen, the method comprising:

acquiring first shading correction data, upon the detecting unit detecting setting of the original, by reading the white reference board while moving the light source up to a position of the white reference board; **characterized by**:

determining, upon receiving an original reading start reguest, whether to execute acquisition of the shading correction data again before reading a first original to acquire second shading correction data; and performing shading correction, upon determining to execute acquisition of the shading correction data again before reading a first original, by using the second shading correction data, and performing shading correcting, upon determining not to execute acquisition of the shading correction data again before reading a first original, by using the first shading correction data acquired

wherein the determination as to whether to execute acquisition of the shading correction data, is based on a type of an application selected from, a fax application, a copy application and a scanner application that has requested reading of the original by using the reading unit.

4. The method according to claim 3, wherein the determining includes determining, based on a read mode of the original by the reading unit, whether to execute acquisition of the shading correction data.

5. The method according to claim 4, wherein the determining includes determining, based on at least whether the read mode of the original by the reading unit is a color read mode or an auto density mode, whether to execute acquisition of the shading correction data.

6. The method according to any one of claims 3 to 5, wherein the determining includes determining, based on a type of an application that has requested reading of the original by using the reading unit, whether to execute acquisition of the shading correction data.

7. The method according to any one of claims 3 to 6, wherein the determining includes determining, based on whether a predetermined time period has elapsed after the detecting unit detects setting of the original, whether to execute acquisition of the shading correction data.

8. The method according to claim 7, wherein a value of the predetermined time period differs according to the read mode of the original by the reading unit and the type of the application that has requested reading of the original.

**Patentansprüche**

1. Bildlesevorrichtung, umfassend:

eine Lichtquelle (2);
eine Weißreferenztafel, welche zur Schattierungskorrektur (11) verwendet wird;
eine Leseeinheit (12), welche konfiguriert ist, um ein Original zu lesen, während sich das Original auf einer Originalplatte bewegt;
eine Detektoreinheit (32, 91), welche konfiguriert ist, um zu detektieren, ob ein Original auf der Originalplatte angebracht ist;
eine Erfassungseinheit (92), welche konfiguriert ist, um zu veranlassen, dass die Lichtquelle sich nach oben in eine Position der Weißreferenztafel bewegt und um erste Schattierungskorrekturdaten durch Lesen der Weißreferenztafel zu erfassen, zumindest wenn die Detektoreinheit das Anbringen des Originals auf die Originalplatte detektiert; **gekennzeichnet durch**:
eine Bestimmungseinheit (92), welche konfiguriert ist, um beim Empfang einer Originallesestartanforderung von einer Anwendung zu bestimmen, ob die Erfassung der Schattierungskorrekturdaten nochmals durch Verwenden der Erfassungseinheit ausgeführt werden muss, um zweite Schattierungskorrekturdaten zu erfassen, bevor ein erstes Original gelesen wird; und
eine Schattierungskorrektureinheit (46), welche konfiguriert ist, um, beim Bestimmen durch die Bestimmungseinheit, dass die Erfassung der Schattierungskorrekturdaten nochmals durch Verwenden der Erfassungseinheit vor dem Lesen des ersten Originals ausgeführt werden soll, die Schattierungskorrektur durch Verwenden der zweiten Schattierungskorrekturdaten auszuführen, und welche, beim Bestimmen, dass die Erfassung der Schattierungskorrekturdaten durch Verwenden der Erfassungseinheit vor dem Lesen des ersten Originals nicht ausgeführt werden soll, die Schattierungskorrektur durch Verwenden der ersten Schattierungskorrekturdaten durch Verwenden der ersten Schattierungskorrekturdaten ausführt, wobei die Bestimmungseinheit (91) bestimmt, auf der Basis eines Typs einer Anwendung, welche zwischen einer Faxanwendung, einer Kopieranwendung und einer Abtastungsanwendung, ausgewählt wird, welche das Lesen des Originals durch Verwenden der Leseeinheit angefordert hat, ob die Erfassung der Schattierungskorrekturdaten ausgeführt werden soll.

2. Bilderzeugungsvorrichtung, umfassend:

die Bildlesevorrichtung nach Anspruch 1; und
eine Bilderzeugungseinheit, welche ausgebildet ist, um ein Bild auf der Basis von Daten zu erzeugen, welche durch die Bildleseeinheit erfasst werden.

3. Bildleseverfahren, welches auf einer Bildlesevorrichtung implementiert wird, welche eine Lichtquelle, eine Weißreferenztafel, welche zur Schattierungskorrektur verwendet wird, eine Leseeinheit, welche ein Original liest, während sich das Original auf einer Originalplatte bewegt, und eine Detektoreinheit umfasst, welche detektiert, ob ein Original auf der Originalplatte angebracht ist, wobei das Verfahren umfasst:

Erfassen von ersten Schattierungskorrekturdaten, sobald die Detektoreinheit das Anbringen des Originals detektiert, durch Lesen der Weißreferenztafel, während die Lichtquelle nach oben in eine Position der Weißreferenztafel bewegt wird; **gekennzeichnet durch**:

Bestimmen, beim Empfang einer Originallesestartanforderung, ob die Erfassung der Schattierungskorrekturdaten nochmals vor dem Lesen eines ersten Originals ausgeführt werden soll, um zweite Schattierungskorrekturdaten zu erfassen; und
Ausführen der Schattierungskorrektur, beim Bestimmen, dass die Erfassung der Schattierungskorrekturdaten nochmals vor dem Lesen des ersten Originals ausgeführt werden soll, durch Verwenden der zweiten Schattierungskorrekturdaten, und Ausführen der Schattierungskorrektur, beim Bestimmen, dass die Erfassung der Schattierungskorrekturdaten vor dem Lesen eines ersten Originals nicht nochmals ausgeführt werden soll, durch Verwenden der ersten erfassten Schattierungskorrekturdaten,

wobei die Bestimmung ob die Erfassung der Schattierungskorrekturdaten auszuführen ist, auf dem Typ einer Anwendung basiert ist, welche zwischen einer Faxanwendung, einer Kopieranwendung und einer Abtastanwendung ausgewählt ist, welche das Lesen des Originals durch Verwenden der Leseeinheit angefordert hat.

4. Verfahren nach Anspruch 3, wobei das Bestimmen das Bestimmen auf der Basis eines Lesemodus des Originals durch die Leseeinheit umfasst, ob die Erfassung der Schattierungskorrekturdaten auszuführen ist.

5. Verfahren nach Anspruch 4, wobei das Bestimmen das Bestimmen, zumindest auf der Basis der Tatsache umfasst, dass das Lesemodus des Originals durch die Leseeinheit ein Farblesemodus oder ein Auto-Dichte-Modus ist, ob die Erfassung der Schattierungskorrekturdaten auszuführen ist.

6. Verfahren nach einem der Ansprüche 3 bis 5, wobei das Bestimmen das Bestimmen umfasst, auf der Basis des Typs der Anwendung, welche das Lesen des Originals durch Verwenden der Leseeinheit angefordert hat, ob die Erfassung der Schattierungskorrekturdaten auszuführen ist.

7. Verfahren nach einem der Ansprüche 3 bis 6, wobei das Bestimmen das Bestimmen umfasst, auf der Basis der Tatsache, dass eine vorbestimmte Zeitspanne nach dem Detektieren durch die Detektoreinheit des Originals abgelaufen ist, ob die Erfassung der Schattierungskorrekturdaten auszuführen ist.

8. Verfahren nach Anspruch 7, wobei sich ein Wert der vorbestimmten Zeitspanne in Abhängigkeit des Lesemodus des Originals durch die Leseeinheit und des Typs der Anwendung unterscheidet, welche das Lesen des Originals angefordert hat.

**Revendications**

1. Dispositif de lecture d'image comprenant :

   une source de lumière (2) ;
   une carte de référence blanche qui est utilisée pour une correction d'ombrage (11) ;
   une unité de lecture (12) qui est configurée de manière à ce qu'elle lise un original, tandis que l'original est déplacé sur un plateau d'original ;
   une unité de détection (32, 91) qui est configurée de manière à ce qu'elle détecte si oui ou non un original est établi sur le plateau d'original ;
   une unité d'acquisition (92) qui est configurée de manière à ce qu'elle provoque le déplacement en hauteur de la source de lumière jusqu'à une position de la carte de référence blanche et de manière à ce qu'elle acquière des premières données de correction d'ombrage en lisant la carte de référence blanche, au moins lorsque l'unité de détection détecte l'établissement de l'original sur le plateau d'original ;
   **caractérisé par** :

   une unité de détermination (92) qui est configurée de manière à ce qu'elle détermine, suite à la réception d'une requête de démarrage de lecture d'original qui provient d'une application, si oui ou non il convient d'exécuter une acquisition des données de correction d'ombrage à nouveau en utilisant l'unité d'acquisition afin qu'elle acquière des secondes données de correction d'ombrage, avant la lecture d'un premier original ; et
   une unité de correction d'ombrage (46) qui est configurée de manière à ce qu'elle mette en oeuvre, suite au fait que l'unité de détermination a déterminé qu'il convient d'exécuter une acquisition des données de correction d'ombrage à nouveau en utilisant l'unité d'acquisition avant la lecture du premier original, la correction d'ombrage en utilisant les secondes données de correction d'ombrage, et de manière à ce qu'elle mette en oeuvre, suite à la détermination du fait qu'il ne convient pas d'exécuter une acquisition des données de correction d'ombrage à nouveau en utilisant l'unité d'acquisition avant la lecture du premier original, la correction d'ombrage en utilisant les premières données de correction d'ombrage, dans lequel l'unité de détermination (91) détermine si oui ou non il convient d'exécuter une acquisition des données de correction d'ombrage, sur la base d'un type d'une application qui est sélectionnée parmi une application de fax, une application de copie et une application de scanner, laquelle application a demandé en requête la lecture de l'original en utilisant l'unité de lecture.

2. Appareil de formation d'image comprenant :

   le dispositif de lecture d'image selon la revendication 1 ; et
   une unité de formation d'image qui est agencée de manière à ce qu'elle forme une image sur la base de données qui sont acquises par l'unité de lecture d'image.

3. Procédé de lecture d'image mis en oeuvre sur un dispositif de lecture d'image qui inclut une source de lumière, une carte de référence blanche qui est utilisée pour une correction d'ombrage, une unité de lecture qui lit un original, tandis que l'original est déplacé sur un plateau d'original et une unité de détection qui détecte si oui ou non un original est établi sur le plateau d'original, le procédé comprenant :

   l'acquisition de premières données de correction d'ombrage, suite au fait que l'unité de détection a détecté l'établissement de l'original, en lisant la carte de référence blanche tout en déplaçant la source de lumière jusqu'à une position de la carte de référence blanche ;
   **caractérisé par** :

   la détermination, suite à la réception d'une requête de démarrage de lecture d'original, de si oui ou non il convient d'exécuter une acquisition des données de correction d'ombrage à nouveau avant la lecture d'un premier original de manière à acquérir des secondes données de correction d'ombrage ; et
   la réalisation d'une correction d'ombrage, suite à la détermination du fait qu'il convient d'exécuter une acquisition des données de correction d'ombrage à nouveau avant la lecture d'un premier original, en utilisant les secondes données de correction d'ombrage, et la réalisation d'une correction d'ombrage, suite à la détermination du fait qu'il ne convient pas d'exécuter une acquisition des données de correction d'ombrage à nouveau avant la lecture d'un premier original, en utilisant les premières données de correction d'ombrage qui ont été acquises ; dans lequel :

la détermination de si oui ou non il convient d'exécuter une acquisition des données de correction d'ombrage est basée sur un type d'une application qui est sélectionnée parmi une application de fax, une application de copie et une application de scanner, laquelle application a demandé en requête la lecture de l'original en utilisant l'unité de lecture.

4. Procédé selon la revendication 3, dans lequel la détermination inclut la détermination, sur la base d'un mode de lecture de l'original par l'unité de lecture, de si oui ou non il convient d'exécuter une acquisition des données de correction d'ombrage.

5. Procédé selon la revendication 4, dans lequel la détermination inclut la détermination, sur la base au moins de si le mode de lecture de l'original par l'unité de lecture est un mode de lecture en couleur ou un mode à densité automatique, de si oui ou non il convient d'exécuter une acquisition des données de correction d'ombrage.

6. Procédé selon l'une quelconque des revendications 3 à 5, dans lequel la détermination inclut la détermination, sur la base d'un type d'une application qui a demandé en requête la lecture de l'original en utilisant l'unité de lecture, de si oui ou non il convient d'exécuter une acquisition des données de correction d'ombrage.

7. Procédé selon l'une quelconque des revendications 3 à 6, dans lequel la détermination inclut la détermination, sur la base de si oui ou non une période temporelle prédéterminée s'est écoulée après que l'unité de détection a détecté l'établissement de l'original, de si oui ou non il convient d'exécuter une acquisition des données de correction d'ombrage.

8. Procédé selon la revendication 7, dans lequel une valeur de la période temporelle prédéterminée diffère en fonction du mode de lecture de l'original par l'unité de lecture et du type de l'application qui a demandé en requête la lecture de l'original.

# FIG. 1

EP 2 141 904 B1

# FIG. 2

# FIG. 3

# FIG. 4

| SCANNER 40 | IMAGE PROCESSING UNIT 41 | PRINTER UNIT 42 |

**9** CCD

**43** ANALOG PROCESSING CIRCUIT

**44** A/D CONVERTER

**45** INTER-LINE CORRECTING UNIT

**56** LEVEL CONVERTING UNIT

**46** SHADING CORRECTING UNIT

**48** DOT CORRECTING UNIT

**49** SCANNER γ CORRECTING UNIT

**50** FILTER

**51** COLOR CORRECTING UNIT

**52** MAGNIFICATION CHANGING UNIT

**53** PRINTER γ CORRECTING UNIT

**54** GRADATION PROCESSING UNIT

**55** LD WRITING UNIT

**47** IMAGE-AREA SEPARATING UNIT

# FIG. 5

# FIG. 6

```
                    START
                      │
                      ▼
              ┌───────────────┐
         ┌───◄   IS SDF       S101
         │    │ ORIGINAL SET?    ╲  NO
         │     ╲               ╱
         │      ╲─────────────╱
         │            │ YES
         │            ▼
         │   ┌─────────────────────────┐ S102
         │   │ MOVE CARRIAGE BELOW WHITE│
         │   │   STANDARD BOARD         │
         │   └─────────────────────────┘
         │            │
         │            ▼
         │   ┌─────────────────────────┐ S103
         │   │ ACQUIRE WHITE STANDARD   │
         │   │   BOARD READ DATA        │
         │   └─────────────────────────┘
         │            │
         │            ▼
         │   ┌─────────────────────────┐ S104
         │   │ MOVE CARRIAGE TO HOME    │
         │   │   POSITION               │
         │   └─────────────────────────┘
```

- S101: IS SDF ORIGINAL SET? — NO / YES
- S102: MOVE CARRIAGE BELOW WHITE STANDARD BOARD
- S103: ACQUIRE WHITE STANDARD BOARD READ DATA
- S104: MOVE CARRIAGE TO HOME POSITION
- S105: IS READING START REQUEST RECEIVED? — NO / YES
- S106: FIRST ORIGINAL SHADING OPERATION
- S107: ACQUIRE ORIGINAL READ DATA
- S108: IS SCANNING OF ALL ORIGINALS COMPLETED? — NO / YES
- END
- S109: IS NEXT SHADING OPERATION TO BE STARTED? — NO / YES
- S110: MOVE CARRIAGE BELOW WHITE STANDARD BOARD
- S111: ACQUIRE WHITE STANDARD BOARD READ DATA
- S112: MOVE CARRIAGE TO HOME POSITION

# FIG. 7

START

S201

IS IT COLOR
READ MODE?

NO (WHITE-BLACK READ MODE)

S205

IS IT COPY
APPLICATION?

YES

NO

S202

MOVE CARRIAGE BELOW WHITE
STANDARD BOARD

NO

S206

IS IT AUTO
DENSITY MODE?

ACQUIRE WHITE STANDARD
BOARD READ DATA

S203

YES

MOVE CARRIAGE TO HOME
POSITION

S204

END

# FIG. 8

```
                    START
                      │
                      ▼
              ┌───────────────┐  S301
         NO(WHITE-BLACK READ MODE)
    IS IT COLOR ◄──────────────────────┐
    READ MODE?                         │
              └───────────────┘        │
                   │YES                ▼
                   │              ┌──────────┐  S306
                   ▼          IS IT COPY ────── YES
         ┌─────────────┐  S302  APPLICATION?        │
         HAS              └──────────┘              │
    NO   MORE THAN T1         │NO                   │
    ◄──  SECONDS ELAPSED      ▼                     ▼
         AFTER SETTING   ┌──────────┐  S307   ┌──────────┐  S308
         ORIGINAL?            HAS          IS IT AUTO ──── YES
         └─────────────┘ YES  MORE THAN T2   DENSITY MODE?    │
              │YES  ◄──────  SECONDS ELAPSED  └──────────┘    │
              │              AFTER SETTING       │NO          │
              │              ORIGINAL?           ▼            │
              │              └──────────┘   ┌──────────┐  S309│
              │                   │NO    YES    HAS          │
              │                   │     ◄──  MORE THAN T3     │
              │                   │         SECONDS ELAPSED   │
              ▼                   │         AFTER SETTING     │
    ┌────────────────┐ S303       │         ORIGINAL?         │
    MOVE CARRIAGE                 │         └──────────┘      │
    BELOW WHITE                   │              │NO          │
    STANDARD BOARD                │              │            │
    └────────────────┘            │              │            │
              │                   │              │            │
              ▼                   │              │            │
    ┌────────────────┐ S304       │              │            │
    ACQUIRE WHITE                 │              │            │
    STANDARD BOARD                │              │            │
    READ DATA                     │              │            │
    └────────────────┘            │              │            │
              │                   │              │            │
              ▼                   │              │            │
    ┌────────────────┐ S305       │              │            │
    MOVE CARRIAGE TO              │              │            │
    HOME POSITION                 │              │            │
    └────────────────┘            │              │            │
              │                   │              │            │
              ▼◄─────────────────┘──────────────┘────────────┘
            END
```

# FIG. 9

```
        91                    92                      93            94

┌──────────────┐    ┌──────────────┐    ┌──────────────┐      ╭─────────╮
│   ORIGINAL   │    │              │    │    MOTOR     │      │         │
│  DETECTING   │──▶ │ CONTROLLING  │──▶ │ CONTROLLING  │──▶   │  MOTOR  │
│     UNIT     │    │    UNIT      │    │   CIRCUIT    │      │         │
└──────────────┘    └──────────────┘    └──────────────┘      ╰─────────╯
                            ▲
                            │
                            ▼
                    ┌─────────────────────────────┐  46
                    │             95              │
                    │       ┌──────────────┐      │   IMAGE DATA
    IMAGE DATA      │       │   SHADING    │      │   AFTER SHADING
    ────────────────┼─────▶ │  CORRECTING  │──────┼──▶ CORRECTION
                    │       │   CIRCUIT    │      │
                    │       └──────────────┘      │
                    │          │    ▲             │
                    │          │    │    96       │
                    │          ▼    │             │
                    │       ┌──────────────┐      │
                    │       │   MEMORY     │      │
                    │       └──────────────┘      │
                    │                             │
                    │       SHADING               │
                    │    CORRECTING UNIT          │
                    └─────────────────────────────┘
```

# FIG. 10

**EP 2 141 904 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008173585 A
- JP 2009037788 A
- JP 2007036398 A
- JP 2002305633 B
- JP 2006191375 A